# EUROPEAN PATENT APPLICATION

(11) **EP 2 172 338 A2**
(43) Date of publication of application: **07.04.2010**
(21) Application number: 09155459.2
(22) Date of filing: 18.03.2009
(51) Int. Cl.: B32B 27/36, G02B 6/00

(54) **Multifunction Light Redirecting Films**

(30) Priority: 19.09.2008 US 192514 P
(71) Applicant: SKC Haas Display Films Co., Ltd., Choongchungnamdo (KR)
(72) Inventor: Landry, Michael R., Wolcott, NY 14590 (US); Lei, Herong, Webster, NY 14580 (US)
(74) Representative: Kent, Venetia Katherine

(57) **Abstract**

The present invention provides a multifunction light redirecting film for a liquid crystal display comprising at least one base thermoplastic polymer optical layer having a top surface with a plurality of optical features. The film further provides at least one co-extrudable surface thermoplastic polymer optical layer adjacent the base thermoplastic polymer optical layer, wherein the at least one co-extrudable surface has a pencil hardness of at least 1H.

## Description

### FIELD OF THE INVENTION

Embodiments of the present invention relate to light redirecting films for redirecting light from a light source toward a direction normal to the plane of the film.

### BACKGROUND OF THE INVENTION

Light redirecting films may be used in a variety of applications. Illustratively, light directing films may be used as part of a display or lighting device. Display and lighting devices may be based on a variety of technologies and can have very disparate applications. Regardless of the technology base or application, light-redirecting films may be used to improve the efficiency of the light transmitted from a light source to an output.

One technology that has gained attention in display technologies is liquid crystal (LC) technology. An LC display (LCD) includes a liquid crystal material that is modulated to provide a light-valve function. In many LCD applications, it is useful to improve the power efficiency. Increasing the power efficiency of an LCD (or other similar display) may be useful in improving the image quality of the display, among other benefits.

One way to improve the efficiency of an LCD is by recycling light using light redirecting film(s). The optics of a light redirecting film may be very specific and detailed. A light redirecting film may include a plurality of optical elements. These optical elements may be shaped and arranged to redirect light in an LCD, making the LCD more energy efficient.

In addition, in order to improve the brightness of the image displayed, the number of light sources, or the power of the light sources, or both, continue to increase. This results in increased operating temperatures in optical displays, particularly in larger displays. These relatively high operating temperatures can result in the expansion and deformation of the optical films, including light redirecting films. Furthermore, higher temperatures can result in loss of rigidity of the light redirecting film. The expansion or loss of rigidity of light redirecting films can alter the optical properties of the films and can interfere with the performance of the film in the optical display. Ultimately, this can adversely impact the performance of the optical display.

One option is to fabricate the optical film monolithically from a relatively thick material in an effort to provide a film having both the optical and mechanical properties that are desired. Unfortunately, forming optical features from relatively thick layers of suitable material for optical films is not desirable. One drawback relates to the fabrication of the layer itself. As is known, extruding materials to have a relatively large thickness slows the extrusion process, thereby reducing the run-rate during manufacture and increasing the cost per item.

Another drawback of current light redirecting films and optical lighting films, and the like, is that the tips of the microstructure are susceptible to mechanical damage. For example, light scraping with a fingernail or a hard, relatively sharp edge can cause the tips of the microstructure to break or fracture. Conditions sufficient to break the tips of prior art microstructures are experienced during normal handling of light redirecting films, such as, in the manufacturing of liquid crystal displays for laptop computers.

When microstructure peaks are broken, the reflective and refractive properties of the affected peaks are reduced and the transmitted light scattered to virtually all forward angles. Hence, when the light redirecting film is in a display, and the display is viewed straight on, scratches in the light redirecting film are not as bright compared to the surrounding, undamaged areas of the film. However, when the display is viewed at an angle near or greater than the "cutoff" angle, the angle at which the image on the display is no longer viewable, the scratches look substantially brighter than the surrounding, undamaged areas of the film. In both situations, the scratches are very objectionable from a cosmetic standpoint, and light redirecting film with more than a very few, minor scratches is unacceptable for use in a liquid crystal display.

Due to these shortcomings of known optical films, it may be beneficial to fabricate the optical features or even the smooth surface on the opposite side of the film using certain materials that provide improved scratch performance. Unfortunately, many of these materials are relatively expensive. Fabricating relatively thick optical films in an attempt to meet the demands of size and temperature stability may be cost-prohibitive. Thus, certain optical materials with high scratch performance, while providing desirable optical and physical properties, are precluded from consideration by the cost of the final product.

U. S. Patent No. 7,309,517 (Clinton et. al) discloses a durable optical film including a polymerized optical film structure having a microstructured surface and a plurality of surface modified colloidal nanoparticles. Although this method may improve scratch resistance to the optical film the materials used require fabrication via coating and then curing via electromagnetic radiation or thermal energy. Unfortunately, this process is slow relative to other preferred processes like extrusion roll molding. Also, these films are inherently high cost to produce such films.

What is needed therefore is a light redirecting film having multiple functions and a low-cost method of manufacture that overcomes at least the drawbacks associated with known films described above.

### SUMMARY OF THE INVENTION

The present invention provides a multifunction light redirecting film for a liquid crystal display comprising: at least one base thermoplastic polymer optical layer having a top surface with a plurality of optical features; at least one co-extrudable surface thermoplastic polymer optical layer adjacent the base thermoplastic polymer optical layer, wherein the at least one co-extrudable surface has a pencil hardness of at least 1H.

The present invention provides a multifunction light redirecting film for a liquid crystal display comprising: a polymeric optical core layer having a top side and a bottom side; a top base thermoplastic polymer optical layer on the top side of the core layer; a bottom base thermoplastic polymer optical layer on the bottom side of the core layer; a light redirecting layer for substantially collimating visible light on the top base layer; and wherein the core layer and the base layers comprise materials having a glass transition temperature (T_{g}) that is greater than approximately 70° C.

### BRIEF DESCRIPTION OF THE DRAWINGS

Figure 1 is a cross-sectional view of a multifunction light redirecting film in accordance with an example embodiment;
Figure 2 is a schematic diagram of an apparatus for fabricating a multifunction light redirecting film in accordance with an example embodiment;
Figure 3 is a cross-sectional view of a multifunction light redirecting film in accordance with another example embodiment; and
Figure 4 is a schematic diagram of an apparatus for fabricating optical films in accordance with an example embodiment.

### DETAILED DESCRIPTION OF THE INVENTION

In accordance with an example embodiment, an optical structure includes a top surface having a plurality of optical features, at least one base thermoplastic polymer optical layer, at least one co-extrudable thermoplastic polymer optical surface layer adjacent a base thermoplastic polymer optical layer, wherein at least one surface layer comprises a polymer with a pencil hardness of at least 1H.

In accordance with another example embodiment, an optical structure includes a top surface having a plurality of optical features, a polymer optical core layer, a top base thermoplastic polymer optical layer adjacent to the top side of the core layer, a bottom base thermoplastic polymer optical layer adjacent to the bottom side of the core layer, at least one co-extrudable thermoplastic polymer optical surface layer adjacent a base thermoplastic polymer optical layer, wherein at least one surface layer comprises a polymer with a pencil hardness of at least 1H.

In accordance with another example embodiment, an optical display includes a light valve; a light source and a light redirecting layer, disposed in an optical path between the light source and the light valve. The light redirecting layer includes a top surface having a plurality of optical features, a base thermoplastic polymer optical layer, at least one co-extrudable thermoplastic polymer optical surface layer adjacent the base thermoplastic polymer optical layer, wherein at least one surface layer comprises a polymer with a pencil hardness of at least 1H.

In accordance with another example embodiment, an optical display includes a light valve; a light source and a light redirecting layer, disposed in an optical path between the light source and the light valve. The light redirecting layer includes a top surface having a plurality of optical features, a polymer optical core layer, a top base thermoplastic polymer optical layer adjacent to the top side of the core layer, a bottom base thermoplastic polymer optical layer adjacent to the bottom side of the core layer, at least one co-extrudable thermoplastic polymer optical surface layer adjacent a base thermoplastic polymer optical layer, wherein at least one surface layer comprises a polymer with a pencil hardness of at least 1H.

Light redirecting films of the example embodiments redistribute the light passing through the films such that the distribution of the light exiting the films is directed more normal to the surface of the films. These light redirecting films may be provided with ordered prismatic grooves, lenticular grooves, or pyramids on the light exit surface of the films that change the angle of the film/air interface for light rays exiting the films and cause the components of the incident light distribution traveling in a plane perpendicular to the refracting surfaces of the grooves to be redistributed in a direction more normal to the surface of the films. Such light redirecting films are used, for example, to improve brightness in liquid crystal displays (LCD), laptop computers, word processors, avionic displays, cell phones, PDAs and the like to make the displays look brighter. The invention provides a scratch resistant polymeric layer or layers that can be co-extruded integrally with a base layer polymer allowing for a film that meets all mechanical and optical requirements to be manufactured at a viably low cost.

It is noted that for the purpose of clarity of description, the light redirecting films of the example embodiments are often described in connection with liquid crystal (LC) systems. However, it is emphasized that this is merely an illustrative implementation of the light redirecting films of the example embodiments. In fact, the light redirecting films of the example embodiments may be used in other applications such as light valve-based displays and lighting applications, to mention only a few. As will be apparent to one of ordinary skill in the art having had the benefit of the present description, the light redirecting films may be implemented in other varied technologies.

The term as used herein, "transparent" means the ability to pass radiation without significant deviation or absorption. For this invention, "transparent" material is defined as a material that has a spectral transmission greater than 86%. The term "light" means visible light. The term "polymeric film" means a thin flexible film comprising polymers. The term "optical polymer" means homopolymers, co-polymers and polymer blends that are generally transparent. The term "optical features" means geometrical objects located on or near the surface of a web material that diffuse, turn, collimate, change the color or reflect transmitted or incident light. The term "optical gain", "on axis gain", or "gain" means the ratio of output light intensity divided by input light intensity. Gain is used as a measure of efficiency of a collimating film and can be utilized to compare the performance of various light collimating films.

Individual optical elements, in the context of an optical film, mean elements of well-defined shapes that are projections or depressions in the optical film. Individual optical elements are small relative to the length and width of an optical film. The term "curved surface" is used to indicate a three dimensional feature on a film that has a curvature in at least one plane. "Wedge shaped features" is used to indicate an element that includes one or more sloping surfaces, and these surfaces may be combination of planar and curved surfaces.

The term "optical film" is used to indicate a thin polymer film that changes the nature of transmitted incident light. For example, a collimating optical film provides an optical gain (output/input) greater than 1.0. The term "polarization" means the restriction of the vibration in the transverse wave so that the vibration occurs in a single plane. The term "polarizer" means a material that polarizes incident visible light.

The terms "planar birefringence" and "birefringence" as used herein is the difference between the average refractive index in the film plane and the refractive index in the thickness direction. That is, the refractive index in the machine direction and the transverse direction are totaled, divided by two and then the refractive index in the thickness direction is subtracted from this value to yield the value of the planar birefringence. Refractive indices are measured using an Abbe-3L refractometer using the procedure set forth in Encyclopedia of Polymer Science & Engineering, Wiley, N.Y., 1988, pg. 261. The term "low birefringence" means a material that produces small changes in the polarization state of light and is confined to optical polymer web material that has a birefringence less than 0.01.

An amorphous polymer is a polymer that does not exhibit melting transitions in a standard thermo-gram generated by the differential scanning calorimetry (DSC) method. According to this method (well known to those skilled in the art), a small sample of the polymer (5-20 mg) is sealed in a small aluminum pan. The pan is then placed in a DSC apparatus (e.g., Perkin Elmer 7 Series Thermal Analysis System) and its thermal response is recorded by scanning at a rate of 10-20° C/min from room temperature up to 300° C. A distinct endothermic peak manifests melting. The absence of such peak indicates that the test polymer is functionally amorphous. A stepwise change in the thermo-gram represents the glass transition temperature of the polymer.

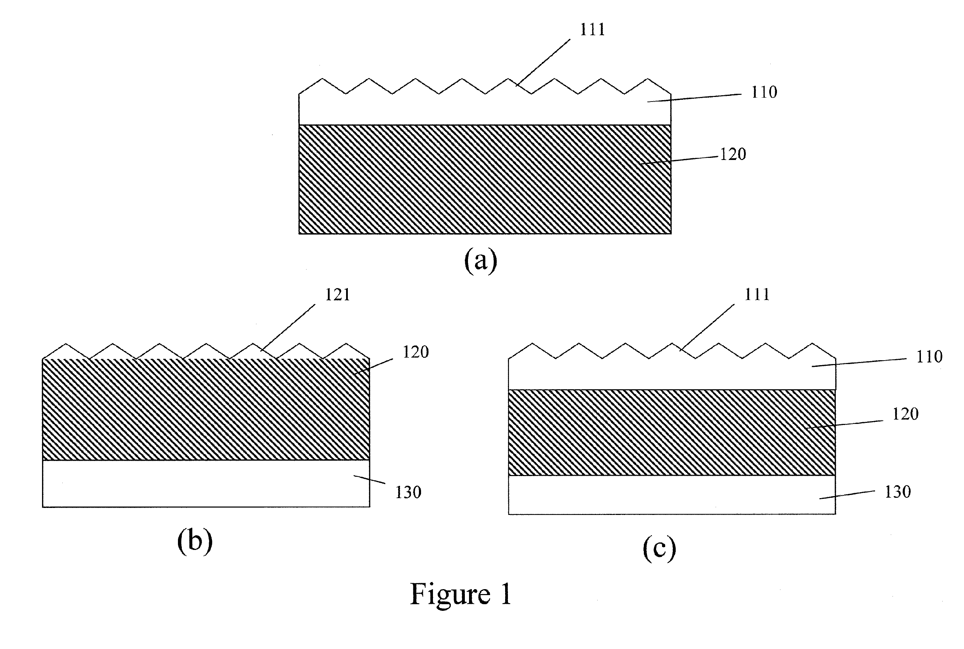

Referring now to the drawings, Figure 1 shows three alternative cross-sectional views (a, b, and c) of an optical structure in accordance with example embodiments. The optical structure or multifunction light redirecting film includes a light-redirecting layer useful in lighting and display applications as previously noted. Further the optical structure may be diffusing, turning, or partially reflecting. The optical structure includes a base layer 120 and an optical layer 110 on top of the base layer, or optical layer 130 on the bottom of the base layer, or both. If optical layer 110 is used on the top of the base layer 120, optical features 111 which are integral to layer 110 are at the top surface of the optical structure. In the absence of optical layer 110, optical features 121 that are integral to base layer 120 are at the top surface of the optical structure.

The base layer 120 provides structural rigidity and thermal stability to the optical structure and is beneficial in preventing deformation of the optical structure when the optical structure has relatively large dimensions or when the optical structure is subject to high operating temperatures over time, or both. Accordingly, the base layer 120 is made of a material and has a thickness useful in preventing deformation due to stress and heat. Furthermore, the base layer 120 is generally, substantially transmissive and have little to no coloration.

In an example embodiment, the base layer 120 is made of a material having a glass transition temperature (T_{g}) greater than approximately 70° C. By selecting a material having a relatively high T_{g} the optical structure is substantially free from warping or shrinkage when exposed to the operating temperatures of displays and lighting devices. As a result, the optical features remain properly oriented to function as designed.

The base layer 120 must also be substantially immune to distortion due to stress because of its dimensions. As noted previously, as displays continue to increase in viewing area, the dimensions of the light redirecting layers also increase. With increased size, the stress placed on the optical structure increase and the structure may flex or bend. This can alter the optical properties of the optical structure and can deleteriously impact the optical quality of an image or performance of a light source. Accordingly, the base layer is selected to have a thickness and is made of a material that provides rigidity to the other layers of the optical structure. In an example embodiment, the base layer 120 has a thickness of approximately 150 µm and a modulus of elasticity of approximately 2.2 GPa.

In addition to desirable mechanical and thermal properties, the base layer may be relatively colorless and substantially transparent. In an example embodiment, the base layer 120 has a transmittivity greater than approximately 0.86. Moreover, in an example embodiment, the base layer 120 has a b* value of approximately -2.0 to approximately +2.0 measured on the Commission on Illumination (CIE) scale. Blue tinting agents such as dyes and pigments may be used to adjust the color of the optical element along the blue-yellow axis. An optical element having a slight blue tint is perceptually preferred by consumers to yellow optical elements as the "whites" in an LCD displayed image will tend to have a blue tint if the optical films utilized in the LCD display device have a blue tint.

Transparent base layers 120 are useful for optical structures that are utilized in light transmission mode. In another example embodiment, it may be beneficial for the base layer 120 to be substantially opaque. An opaque layer could provide high reflectivity, in the case of the base material having a high weight percent of a white pigment such as TiO₂ or BaSO₄, a base layer containing air voids or a base layer containing or having a layer containing reflective metal such as aluminum or silver. Opaque base layers can be utilized for back reflectors for LCD displays, diffusive mirrors or transflective elements.

In an example embodiment, the base layer 120 is a thermoplastic material. In specific embodiments, the base layer 120 may be polycarbonate, polystyrene, polyester (e.g., polyethylene terephthalate (PET)), cellulose triacetate, polypropylene, PEN or PMMA.

The surface thermoplastic optical layers 110 and 130 may be any co-extrudable, amorphous or semi-crystalline thermoplastic material useful in optical applications which have a pencil hardness of at least 1H. Co-extrudable is defined here as a polymer which can be melt extruded at similar processing temperatures as the base layer and will have adhesion to the base layer. Pencil Hardness is defined here as that determined by following ASTM standard 3363. The optical layers 110 and 130 are relatively thin, having a thickness on the order of approximately 25.0 µm. In specific embodiments, the optical layers 110 and 130 may be made of PC copolymer or PMMA. Polymers containing nano-particles of metal oxides for example may be utilized for the optical layers 110 and 130. These materials may be rather expensive, thereby prohibiting the fabrication of a light redirecting layer or similar structure as a monolithic structure having the suitable thickness for structural stability. However, because of the multi-layered structure with the substantially rigid base layer 120, the optical layers 110 and 130 are relatively thin and the benefits of these relatively expensive optical materials may be realized at a reasonable cost.

In specific embodiments, the optical layer includes a plurality of optical features 111 or 121. The optical features and their manufacture may be as described in: U. S. Patent Application Ser. No. 10/868,083, to Brickey and entitled "Thermoplastic Optical Features with High Apex Sharpness", filed June 15, 2004; and U. S. Patent Application Ser. No. 10/939,769 to Wilson and entitled "Randomized Patterns of Individual Optical Elements, filed Sept 13, 2004. The referenced U. S. patent applications are specifically incorporated herein by reference. It is emphasized that the optical features may be other than those described in the referenced applications.

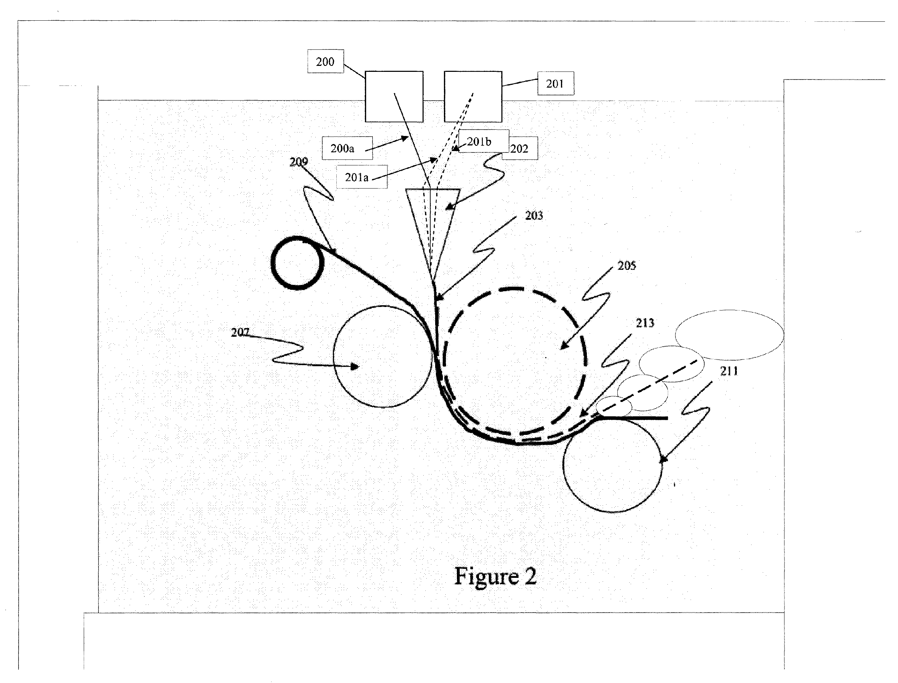

Figure 2 is a simplified schematic diagram of an apparatus for fabricating an optical structure such as those described in connection with Figure 1(a, b, and c). The apparatus includes extruders 200 and 201, which extrude polymeric material feed streams 200a, optional 201a, and optional 201b to co-extrusion die 202. In Figure 2, polymeric material 201a may be the same material as 201b as they are supplied by the same extruder 201. Optionally an additional extruder could be used to feed material 201b enabling a different material to be used as that of 201a. In specific embodiments, the polymeric material 200a forms the optical layer 120 described previously in Figure 1 (a, b, and c). The polymeric material 201a would form optical layer 130 in Figure 1 (b and c). The polymeric material 201b would form optical layer 110 in Figure 1 (a and c). The apparatus also includes a patterned roller 205 that forms the optical features, as illustrated as 111 or 121 of Figure 1 (a, b, and c), in the resultant optical structure 213.

Additionally, the apparatus includes a pressure roller 207 that provides pressure to force extruded layers 203 into patterned roller 205 and stripping roller 211 that aids in the removal of extruded layers 203 from patterned roller 205. In operation, a carrier layer 209 is forced between the pressure roller 207 and the patterned roller 205 with the extruded layers 203. Optical structure 213 is separated from carrier layer 209 after stripping roller 211.

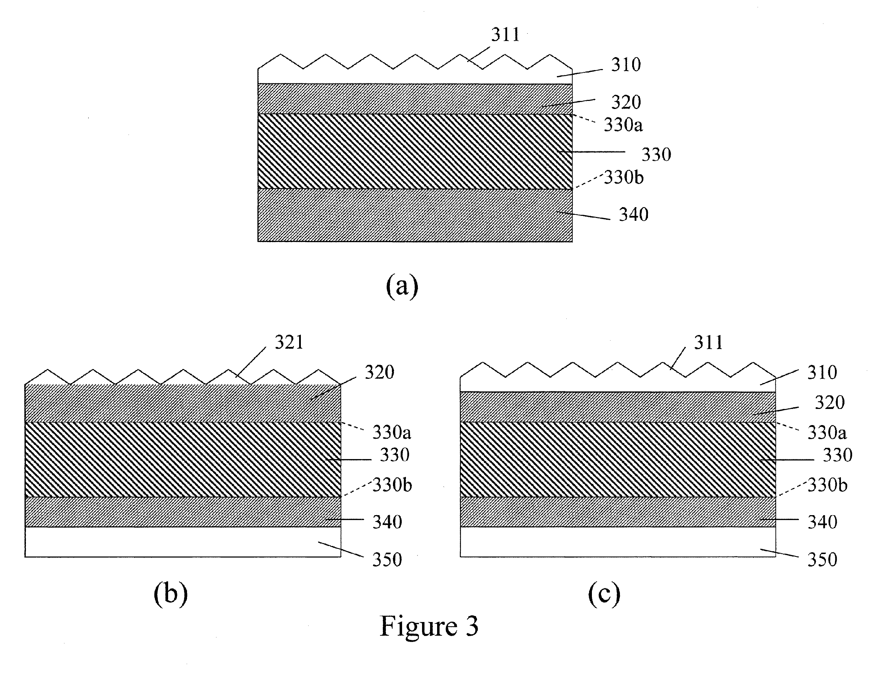

Figure 3 shows three alternative cross-sectional views (a, b, and c) of another optical structure in accordance with example embodiments. The optical structure may include a light-redirecting layer useful in lighting and display applications as noted previously. Further the optical structure may be diffusing, turning, or partially reflecting. The optical structure includes a core layer 330 with base layers 320 and 340 on the top and bottom sides of core layer 330, respectively. The optical structure also includes an optical layer 310 on top of the base layer 320, or optical layer 350 on the bottom of the base layer 340, or both. If optical layer 310 is used on the top of the base layer 320, optical features 311, which are integral to layer 310, are at the top surface of the optical structure. In the absence of optical layer 310, optical features 321 that are integral to base layer 320 are at the top surface of the optical structure. Base layers 320 and 340 have the same characteristics as previously described for base layer 120 of Figure 1. Optical layers 310 and 350 have the same characteristics as previously described for optical layers 110 or 130 of Figure 1, respectively.

The core layer 330 provides additional structural rigidity and thermal stability to the optical structure as that of the base layers 320 and 340. The addition of the core layer is beneficial in preventing deformation of the optical structure when the optical structure has very large dimensions or when the optical structure is subject to very high operating temperatures over time, or both. Accordingly, the core layer 330 is made of a material and has a thickness useful in preventing deformation due to stress and heat. Furthermore, the core layer 330, generally is substantially transmissive and have little if any coloration.

In an example embodiment, the core layer 330 is made of a material having a glass transition temperature (T_{g}) greater than approximately 70° C. By selecting a material having a relatively high T_{g} the optical structure is substantially free from warping or shrinkage when exposed to the operating temperatures of displays and lighting devices. As a result, the optical features remain properly oriented to function as designed.

The core layer 330 must also be substantially immune to distortion due to stress because of its dimensions. As noted previously, as displays continue to increase in viewing area, the dimensions of the light redirecting layers also increase. With increased size, the stress placed on the optical structure increase and the structure may flex or bend. This can alter the optical properties of the optical structure and can deleteriously impact the optical quality of an image or performance of a light source. Accordingly, the base layer is selected to have a thickness and is made of a material that provides rigidity to the other layers of the optical structure. In an example embodiment, the core layer 330 has a thickness of approximately 115 µm and a modulus of elasticity of approximately 5.0 GPa.

In addition to desirable mechanical and thermal properties, the core layer may be relatively colorless and substantially transparent. In an example embodiment, the core layer 330 has a transmittivity greater than approximately 0.86. Moreover, in an example embodiment, the core layer 330 has a b* value of approximately -2.0 to approximately +2.0 measured on the Commission on Illumination (CIE) scale. Blue tinting agents such as dyes and pigments may be used to adjust the color of the optical element along the blue-yellow axis. An optical element having a slight blue tint is perceptually preferred by consumers to yellow optical elements as the "whites" in an LCD displayed image will tend to have a blue tint if the optical films utilized in the LCD display device have a blue tint.

Transparent core layers 330 are useful for optical structures that are utilized in light transmission mode. In other example embodiment, it may be beneficial for the core layer 330 to be substantially opaque. An opaque layer could provide high reflectivity, in the case of the base material having a high weight percent of a white pigment such as TiO₂ or BaSO₄, a core layer containing air voids or a base layer containing or having a layer containing reflective metal such as aluminum or silver. Opaque core layers can be utilized for back reflectors for LCD displays, diffusive mirrors or transflective elements.

In an example embodiment, the core layer 330 is a thermoplastic material. In specific embodiments, the core layer 330 may be polyester such as polyethylene terephthalate (PET) or Polyethylene naphthalate(PEN). Typically, these materials would be biaxially oriented polyester films to improve their physical properties.

The core layer 330 may optionally comprise surface adhesion layers 330a and 330b. The optional adhesion layers 330a or 330b usefully adhere to the core layer 330 and to the base layers 320 and 340, respectively, and thereby provide an integral optical layer. In an example embodiment, the adhesion layers 330a and 330b are disposed over the core layer 330 and polymer chains in these adhesion layers intermingle with polymer chains in the core layer 330. Likewise, the polymer chains of the adhesion layers 330a and 330b intermingle with the polymer chains of the base layers 320 and 340, respectively. This interaction creates sufficient forces to adhere the base layers 320 and 340 to the core layer 330 via the adhesion layers.

The adhesion layers preferably have an adhesion to both the core layer 330 and the base layers 320 and 340 of at least 400 grams per 35 mm width. Adhesion strength between the core layer and the adhesion layers or the base layers and the adhesion layers is measured on an Instron gauge at 23° C. and 50% RH using a standard 180 degree peel test. The sample width is 35 mm and the peel length is 10 cm. Adhesion of at least 400 grams/35 mm is preferred because it has been found that providing an adhesion strength of at least 400 grams/35 mm adhesion prevents unwanted de-lamination of the base layers 320 and 340 from the core layer 330 during a lifetime of use in an LCD display where temperature, temperature gradients and humidity are typically cycled during the lifetime of the device. Further 400 grams/35 mm adhesion strength is a sufficient adhesion to prevent de-lamination of the base layers 320 and 340 from the core layer when there is a coefficient of thermal expansion (CTE) difference between the core layer 330 and the base layers 320 and 340. The magnitude of the CTE difference will tend to increase unwanted inter-layer forces resulting in de-lamination of the layers. By providing sufficient adhesion between the layers, the de-lamination forces are overcome.

The selection of adhesion layers 330a and 330b depends on the materials selected for the core layer 330 and the base layers 320 and 340. In an example embodiment, the adhesion layers 330a and 330b are thermoplastic material of a different class of thermoplastics than core layer 330 and the base layers 320 and 340.

Illustratively, the adhesion layer may be acrylic, polyurethane, polyetherimide (PEI) or Poly(vinyl alcohol) PVA. More preferably, when the core layer comprises oriented PET and the base layers comprise polycarbonate the adhesion layer is polyvinyl acetate-ethylene copolymer or Polyacrylonitrilevinylidene chloride-acrylic acid copolymer with a monomer ratio of 15/79/6.

In another-preferred embodiment, the adhesion layer comprises an electrically conductive polymer. It has been found that some electrically conductive polymers also can function as an adhesion layer. By providing one layer that can both enhance adhesion between the core layer 330 and the base layers 320 and 340, the electrically conductive material reduces unwanted static resulting from the composite structure and can reduce unwanted electrical fields in display devices such as LCD monitors. The electrically conductive material of the present invention is preferably coated from a coating composition comprising a polythiophene/polyanion composition containing an electrically conductive polythiophene with conjugated polymer backbone component and a polymeric polyanion component. A preferred polythiophene component for use in accordance with the present invention contains thiophene nuclei substituted with at least one alkoxy group, e.g., a C₁-C₁₂ alkoxy group or a--O(CH₂CH₂O)ₙCH₃ group, with n being 1 to 4, or where the thiophene nucleus is ring closed over two oxygen atoms with an alkylene group including such group in substituted form. Preferred polythiophenes for use in accordance with the present invention may be made up of structural units corresponding to the following general formula (I) in which: each of R¹ and R² independently represents hydrogen or a C₁₋₄ alkyl group or together represent an optionally substituted C₁₋₄ alkylene group, preferably an ethylene group, an optionally alkyl-substituted methylene group, an optionally C₁₋₁₂ alkyl-or phenyl-substituted 1,2-ethylene group, 1,3-propylene group or 1,2-cyclohexylene group.

The preparation of an electrically conductive polythiophene in the presence of a polymeric polyanion compound may proceed, e.g., by oxidative polymerization of 3,4-dialkoxythiophenes or 3,4-alkylenedioxythiophenes according to the following general formula (II): wherein: R¹ and R² are as defined in general formula (I), with oxidizing agents typically used for the oxidative polymerization of pyrrole and/or with oxygen or air in the presence of polyacids, preferably in aqueous medium containing optionally a certain amount of organic solvents, at temperatures of 0° to 1000°C. The polythiophenes get positive charges by the oxidative polymerization, the location and number of said charges is not determinable with certainty and therefore they are not mentioned in the general formula of the repeating units of the polythiophene polymer. When using air or oxygen as the oxidizing agent their introduction proceeds into a solution containing thiophene, polyacid, and optionally catalytic quantities of metal salts till the polymerization is complete. Oxidizing agents suitable for the oxidative polymerization of pyrrole are described, for example, in J. Am. Soc. 85, 454 (1963). Inexpensive and easy-to-handle oxidizing agents are preferred such as iron (III) salts, e.g. FeCl₃, Fe(ClO₄)₃ and the iron(III) salts of organic acids and inorganic acids containing organic residues, likewise H₂O₂, K₂Cr₂O₇, alkali or ammonium persulfates, alkali perborates, potassium permanganate and copper salts such as copper tetrafluoroborate. Theoretically, 2.25 equivalents of oxidizing agent per mol of thiophene are required for the oxidative polymerization thereof [ref. J. Polym. Sci. Part A, Polymer Chemistry, Vol. 26, p. 1287 (1988)].

For the polymerization, thiophenes corresponding to the above general formula (II), a polyacid and oxidizing agent may be dissolved or emulsified in an organic solvent or preferably in water and the resulting solution or emulsion is stirred at the envisaged polymerization temperature until the polymerization reaction is completed. The weight ratio of polythiophene polymer component to polymeric polyanion component(s) in the polythiophene/polyanion compositions employed in the present invention can vary widely, for example preferably from about 50/50 to 15/85. By that technique stable aqueous polythiophene/polyanion dispersions are obtained having a solids content of 0.5 to 55% by weight and preferably of 1 to 10% by weight. The polymerization time may be between a few minutes and 30 hours, depending on the size of the batch, the polymerization temperature and the kind of oxidizing agent. The stability of the obtained polythiophene/polyanion composition dispersion may be improved during and/or after the polymerization by the addition of dispersing agents, e.g. anionic surface active agents such as dodecyl sulfonate, alkylaryl polyether sulfonates. The size of the polymer particles in the dispersion is typically in the range of from 5 nm to 1 µm, preferably in the range of 40 to 400 nm.

Polyanions used in the synthesis of these electrically conducting polymers are the anions of polymeric carboxylic acids such as polyacrylic acids, polymethacrylic acids or polymaleic acids and polymeric sulfonic acids such as polystyrenesulfonic acids and polyvinylsulfonic acids, the polymeric sulfonic acids being those preferred for this invention. These polycarboxylic and polysulfonic acids may also be copolymers of vinylcarboxylic and vinylsulfonic acids with other polymerizable monomers such as the esters of acrylic acid and styrene. The anionic (acidic) polymers used in conjunction with the dispersed polythiophene polymer have preferably a content of anionic groups of more than 2% by weight with respect to said polymer compounds to ensure sufficient stability of the dispersion. The molecular weight of the polyacids providing the polyanions preferably is 1,000 to 2,000,000, particularly preferably 2,000 to 500,000. The polyacids or their alkali salts are commonly available, e.g., polystyrenesulfonic acids and polyacrylic acids, or they may be produced based on known methods. Instead of the free acids required for the formation of the electrically conducting polymers and polyanions, mixtures of alkali salts of polyacids and appropriate amounts of monoacids may also be used.

Preferred electrically-conductive polythiophene/polyanion polymer compositions for use in the present invention include 3,4-dialkoxy substituted polythiophene/poly(styrene sulfonate), with the most preferred electrically-conductive polythiophene/polyanion polymer composition being poly(3,4-ethylene dioxythiophene)/poly(styrene sulfonate), which is available commercially from Bayer Corporation as Baytron P. Other preferred electrically conductive polymers include poly(pyrrole styrene sulfonate) and poly(3,4-ethylene dioxypyrrole styrene sulfonate).

In order to further increase the adhesion of the adhesion layers 330a and 330b to the core layer 330, the surface of the core layer 330 in contact with the adhesion layers 330a and 330b may be roughened to have scratches or grooves therein in either a random pattern or an ordered pattern. The roughened surface allows additional contact area between the core layer 330 and the adhesion layers 330a and 330b thereby increasing adhesion compared to an optically smooth core layer 330. A roughened surface with an roughness average between 0.8 and 4.0 micrometers has been found to provide an increase in adhesion layers 330a and 330b to core layer 330. At a surface roughness greater than 5.0 micrometers, the adhesion layers begin to have difficulty completely filing in the roughness features, creating small air voids. Of course, it is important that the grooves or scratches be relatively small so that optical affects such as diffraction and refraction are substantially avoided. In an example embodiment, prior to disposing the adhesion layers 330a and 330b over the core layer 330, the surface of the core layer may be brushed, sandblasted or etched using plasma. As described herein, this roughening may be carried out during the extrusion and feature forming process. Alternatively, the roughening may be carried out before the extrusion feature forming process, with the core layer 330 being roughened before further processing to form the optical structure.

In another preferred embodiment of the invention, any of the layers 310, 320, 330, 340, or 350 preferably comprise a hazing agent to diffuse light. By providing a means to diffuse light, the optical structure can both function as a light collimator and a diffuser thereby combining two functions into a single component. Further, a layer having a low haze value between 10 and 40 and has been shown to hide small defects in the optical element significantly decreasing the ability of a display consumer to detect defects. Furthermore, such diffusive layers can create a more gentle drop off in optical gain of collimating films as the viewing angle becomes wider or increases from the normal viewing position.

Preferred means for light diffusion is in the bulk of a layer such as light scattering particles such as TiO2, nano-sized clay, glass beads, air voids, immiscible polymers, siloxane, and cross linked polymeric beads. The particular particle used preferably has a refractive index no more than 0.05 different than that of the matrix polymer used in the layer containing the diffusive particle. Larger differences in refractive index can result in excessive back scattering resulting in excessive reduction in optical gain of collimating films. Typically the size of such particles is preferably between 0.5 and 15 um. Smaller particles are not efficient at scattering visible light and larger particles can result in plugging of filtration systems in extrusion processes.

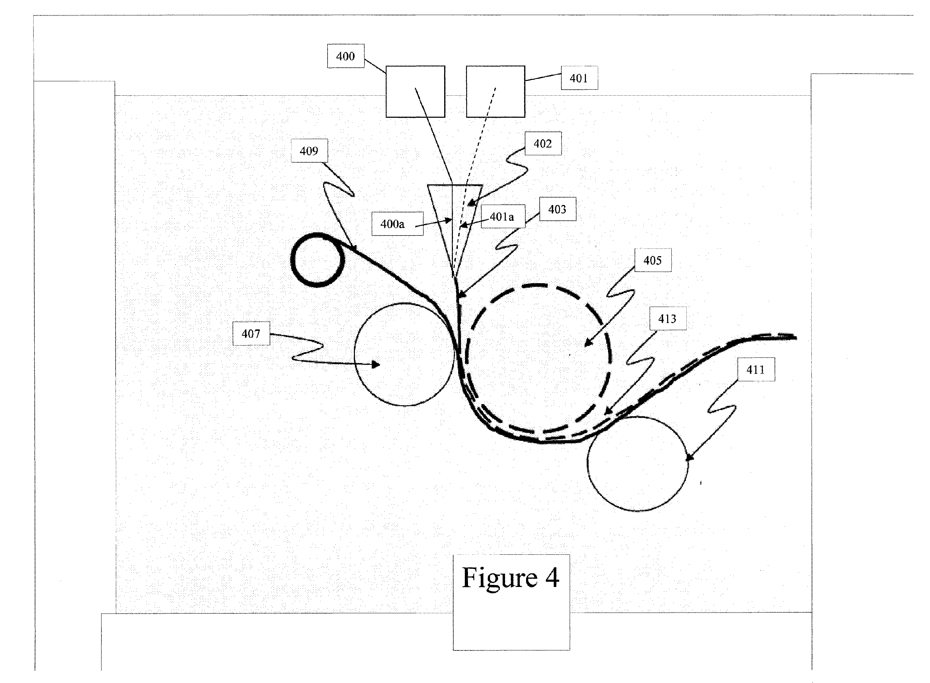

Figure 4 is a simplified schematic diagram of an apparatus for fabricating an optical structure such as those described in connection with Figure 3 (a, b, and c). The apparatus includes extruders 400 and 401, which extrude polymeric material feed streams 400a and optional 401 a to co-extrusion die 402. In specific embodiments, the polymeric material 400a forms the base layers 320 and 340 described previously in Figure 3 (a, b, and c). The polymeric material 401 a would form optional optical layer 310 in Figure 3(a and c) and optional optical layer 350 in Figure 3 (b and c). The apparatus also includes a patterned or unpatterned roller 405 that forms either the smooth bottom surface of layers 340 or 350 in FIG. 3 or the optical features, as illustrated as 311 or 321 of Figure 3 (a, b, and c), in the resultant optical structure 413. Additionally, the apparatus includes a pressure roller 407 that provides pressure to force extruded layers 403 into patterned roller 405 and stripping roller 411 that aids in the removal of extruded layers 403 from patterned roller 405.

In operation, in a first pass process step a core layer 409 is forced between the pressure roller 407 and the unpatterned roller 405 with the extruded layers 403. Optical structure 413 comprises the core layer with bottom base layer 340 and optional optical layer 350 as in Figure 3(a, b, and c). The optical structure 413 is then wound up into a roll. In a second pass process step the first pass optical structure 413 becomes layer 409 of Figure 4 and is forced between the pressure roller 407 and a patterned roller 405 with the second pass extruded layers 403. Second pass optical structure 413 comprises the first pass optical structure with top base layer 320 and optional optical layer 310 as in Figure 3(a,b, and c).

Various optical layers, materials, and devices may also be applied to, or used in conjunction with, the films and devices of the present invention for specific applications. These include, but are not limited to, magnetic or magnetooptic coatings or films; liquid crystal panels, such as those used in display panels and privacy windows; photographic emulsions; fabrics; prismatic films, such as linear Fresnel lenses; brightness enhancement films; holographic films or images; embossable films; anti-tamper films or coatings; IR transparent film for low emissivity applications; release films or release coated paper; and polarizers or mirrors.

The invention may be used in conjunction with liquid crystal display devices, typical arrangements of which are described in the following. Liquid crystals (LC) are widely used for electronic displays. In these display systems, an LC layer is situated between a polarizer layer and an analyzer layer and has a director exhibiting an azmithal twist through the layer with respect to the normal axis. The analyzer is oriented such that its absorbing axis is perpendicular to that of the polarizer. Incident light polarized by the polarizer passes through a liquid crystal cell is affected by the molecular orientation in the liquid crystal, which can be altered by the application of a voltage across the cell. By employing this principle, the transmission of light from an external source, including ambient light, can be controlled. The energy required to achieve this control is generally much less than that required for the luminescent materials used in other display types such as cathode ray tubes. Accordingly, LC technology is used for a number of applications, including but not limited to digital watches, calculators, portable computers, electronic games for which light weight, low power consumption and long operating life are important features.

Active-matrix liquid crystal displays (LCDs) use thin film transistors (TFTs) as a switching device for driving each liquid crystal pixel. These LCDs can display higher-definition images without cross talk because the individual liquid crystal pixels can be selectively driven. Optical mode interference (OMI) displays are liquid crystal displays, which are "normally white," that is, light is transmitted through the display layers in the off state. Operational mode of LCD using the twisted nematic liquid crystal is roughly divided into a birefringence mode and an optical rotatory mode. "Film-compensated super-twisted nematic" (FSTN) LCDs are normally black, that is, light transmission is inhibited in the off state when no voltage is applied. OMI displays reportedly have faster response times and a broader operational temperature range.

In addition, the invention materials can be utilized in other display devices such as OLED and rear projection systems. Further, the invention material are useful for, but not limited to, improve the output of commercial and residential lighting systems, retro-reflective systems, solar cells, automobile lighting, traffic lighting and graphic art applications.

## Claims

1. A multifunction light redirecting film for a liquid crystal display comprising:
at least one base thermoplastic polymer optical layer having a top surface with a plurality of optical features;
at least one co-extrudable surface thermoplastic polymer optical layer adjacent the base thermoplastic polymer optical layer, wherein the at least one co-extrudable surface has a pencil hardness of at least 1H.

2. The multifunction light redirecting film as recited in claim 1, wherein the plurality of optical structure is a light redirecting layer for substantially collimating visible light.

3. The multifunction light redirecting film as recited in claim 1, wherein the base layer has a glass transition temperature (T_{g}) greater than 70° C.

4. The multifunction light redirecting film as recited in claim 1, wherein the at least one co-extruded surface layer comprises a polycarbonate copolymer and the at least one base layer comprises a polycarbonate.

5. A multifunction light redirecting film for a liquid crystal display comprising:
a polymeric optical core layer having a top side and a bottom side;
a top base thermoplastic polymer optical layer on the top side of the core layer;
a bottom base thermoplastic polymer optical layer on the bottom side of the core layer;
a light redirecting layer for substantially collimating visible light on the top base layer; and
wherein the core layer and the base layers comprise materials having a glass transition temperature (T_{g}) that is greater than approximately 70° C.

6. The multifunction light redirecting film as recited in claim 5, wherein the core layer has a thickness of approximately 115 µm and a modulus of elasticity of approximately 5.0 GPa.

7. The multifunction light redirecting film as recited in claim 5, further comprising at least one surface layer on the bottom base layer with a pencil hardness of at least 1H.

8. The multifunction light redirecting film as recited in claim 5, wherein the at least one surface layer comprises a polycarbonate copolymer, the top and bottom base layers is selected from the group comprising polycarbonate, polystyrene, polyester, cellulose triacetate, polypropylene, PEN or PMMA, and the core layer comprises a biaxially oriented polyester.

9. The multifunction light redirecting film as recited in claim 8, wherein one or more of each of the layers contain a hazing agent.

10. The multifunction light redirecting film as recited in claim 5, further comprising an adhesive layer between the core layer and the top and bottom base layers.
